# EUROPEAN PATENT APPLICATION

(11) **EP 2 664 632 A1**
(43) Date of publication of application: **20.11.2013**
(21) Application number: 13180154.0
(22) Date of filing: 29.07.2009
(51) Int. Cl.: C08F 8/14, C08F 8/32, C10M 145/00, C10M 107/28, C10M 107/40, C10M 109/00, C10M 145/10, C10M 149/02, C10M 177/00, C10M 159/00

(54) **NOVEL COPOLYMERS AND LUBRICATING COMPOSITIONS THEREOF**

(30) Priority: 31.07.2008 US 85020 P
(62) Divisional of application: 09790900.6
(71) Applicant: The Lubrizol Corporation, Wickliffe, Ohio 44092-2298 (US)
(72) Inventor: Price, David, Belper, Derby DE56 1 QN (GB); Barton, William, Belper, Derby DE56 1 QN (GB); Visger, Daniel C., Wickliffe, Ohio 44092-2298 (US)
(74) Representative: Mallalieu, Catherine Louise

(57) **Abstract**

The present invention relates to a copolymer comprising units derived from monomers (i) an α-olefin and (ii) an ethylenically unsaturated carboxylic acid or derivatives thereof esterified with a primary alcohol branched at the ss- or higher position, wherein the copolymer has a reduced specific viscosity of up to 0.08. The invention further provides for a lubricating composition containing said copolymer. The invention further provides a method and use of controlling viscosity index by supplying to an oil of lubricating viscosity the copolymer with pendant groups. In addition, the copolymer of the present invention may be useful as a base oil replacement.

## Description

### FIELD OF INVENTION

The present invention relates to a novel copolymer with pendant groups. The invention further provides for a lubricating composition containing said copolymer. The invention further provides a method and use of controlling viscosity index by supplying to an oil of lubricating viscosity the copolymer with pendant groups. In addition, the copolymer of the present invention may be useful as a base oil replacement.

### BACKGROUND OF THE INVENTION

[0001] Viscosity index improvers are known to be added to lubricating oil compositions to improve the viscosity index of the lubricant. Typical viscosity index improvers include polymers of methacrylates, acrylates, olefins (such as copolymers of alpha-olefins and maleic anhydride and esterified derivatives thereof), or maleic-anhydride styrene copolymers, and esterified derivatives thereof. The viscosity index improvers tend to incorporate ester functional groups in pendant/grafted/branched groups. The ester functional groups may be derived from linear alkyl alcohols with 1 to 40 carbon atoms. Recent attempts have been made to produce viscosity index improvers from copolymers of alpha-olefins. However, such viscosity index improvers have poor shear stability, too high a viscosity at low temperature, poor fuel economy, and poor non-dispersant cleanliness.

In addition, lubricants capable of performing at lower viscosity (in for instance driveline devices) typically provide increased fuel economy (thus improving CAFE efficiency). Conversely, lower viscosity fluids also contribute to elevated gear and transmission operating temperatures, which are believed to reduce fuel economy.

US Patent 7,254,249 discloses a lubricant additive based on a copolymer or a terpolymer made by free radical polymerisation of maleic anhydride or unsaturated carboxylic acids and an 1-olefin and an oligo-olefin or polyisobutene. The copolymer is modified/grafted with aliphatic and /or aromatic amines. The copolymer is suitable as soot and sludge dispersant.

US Patent 4,526,950 discloses copolymers of alpha-olefins having at least about 6 carbon atoms and unsaturated carboxylic acids or derivatives thereof, such as maleic anhydride, may be prepared by heating reactive amounts only of the monomers with a free radical initiator, in a solvent-free system and typically at a temperature of at least about 135 °C. There is no disclosure of the reduced specific viscosity of the copolymers.

US Patent 6,419,714 discloses an aqueous hydrocarbon fuel composition containing a polyacidic polymer derived from C₄ to C₃₀ olefin/maleic anhydride copolymers. There is no disclosure of the reduced specific viscosity of the copolymers.

International Application WO 07/133999 discloses a polymer with pendant groups may be a copolymer of an α-olefin and an unsaturated di-acid or an anhydride thereof. These polymer backbones are described as the same as those defined in US Patents 6,419,714 and US 4,526,950. The polymers of WO 07/133999 are useful in a lubricant to provide at least one of acceptable dispersancy properties, acceptable shear stability, acceptable viscosity index control and acceptable low temperature viscosity.

US Patent US 6,573,224 discloses compositions for two-cycle engines comprising an ester copolymer of an alpha-olefin and diester selected from a dialkyl fumarate and a dialkyl maleate, an aliphatic diester having exactly two ester groups and 20 to 40 carbon atoms.

US 6,174,843 discloses an esterified alpha-olefin maleic anhydride copolymer wherein the number of repeating units ranges from about 20 to about 220, wherein the esterified alpha-olefin maleic anhydride copolymer is prepared by: (1) reacting maleic anhydride and a mixture of linear alpha-olefins of from about 10 to about 18 carbon atoms to form an alpha olefin-maleic anhydride copolymer having a molecular weight of from 18,000 to 40,000 and (2) reacting the alpha olefin-maleic anhydride copolymer with a mixture of C₉-C₁₈ alcohols containing 47% C₁₂-C₁₆ alcohols, 20% C₉-C₁₀ alcohols and 33% C₁₆-C₁₈ alcohols by weight. The copolymer is employed in a method for dispersing visible wax particles in a lubricating oil containing fractions of naphthenic or paraffinic crude oil at room temperature.

Other parameters influencing performance include lubricant viscosity and whether mono-grade or multi-grade lubricant fluids are useful for control of low temperature viscometrics and/or high temperature viscometrics. In some instances multi-grade lubricants have been prepared with polyalphaolefins, or brightstock.

The availability of bright stock is diminishing, resulting in high volume uses such as those for 2-stroke or 4-stroke marine or stationary power engines requiring alternative solutions to impart the desired viscometrics in lubricants.

For synthetic lubricants such as polyalphaolefins (known in lubricant applications such as driveline or engine oil) or polyol esters (known in refrigerant lubricants), it is believed that with development of new additives, there may be a need to improve the compatibility of lubricant additives with synthetic lubricants whilst maintaining viscometrics and optionally providing additional oxidation control.

US Patents US 5,435,928 and US 5,176,841 both disclose alpha-beta- unsaturated dicarboxylic acid esters and alpha-olefins polymers useful as synthetic lubricating oils, minerals oil, lubricant additives, and lubricants for shaping treatment of thermoplastic plastics. However, neither patent discloses the ability of the polymers disclosed therein as lubricants capable of providing compatibility of lubricant additives whilst maintaining viscometrics, nor oxidation control.

### SUMMARY OF THE INVENTION

In one embodiment the invention provides a copolymer comprising units derived from monomers (i) an α-olefin and (ii) an ethylenically unsaturated carboxylic acid or derivatives thereof esterified with a primary alcohol branched at the β- or higher position, wherein the copolymer, prior to esterifiaction, has a reduced specific viscosity of up to 0.08, or 0.02 to 0.08 (or 0.02 to 0.07, 0.03 to 0.07 or 0.04 to 0.06). Typically the RSV ranges described herein are based on the mean of three measurements made on the copolymer.

The copolymer may instead of RSV be defined in terms of weight average molecular weight. Typically the weight average molecular weight is measured on the final esterified copolymer, optionally capped with an amine. The weight average molecular weight may be 5000 to 20,000, or 13,000 to 18,000.

The copolymer reduced specific viscosity (RSV) is measured by the formula RSV = (Relative Viscosity - 1)/Concentration, wherein the relative viscosity is determined by measuring, by means of a dilution viscometer, the viscosity of a solution of 1.6 g of the copolymer in 100 cm³ of acetone and the viscosity of acetone at 30 °C. A more detailed description of RSV is provided below. The RSV is determined for the copolymer of an α-olefin and (ii) an ethylenically unsaturated carboxylic acid or derivatives thereof before esterification with the a primary alcohol branched at the β- or higher position.

In different embodiments the primary alcohol branched at the β- or higher position may have at least 12 (or at least 16, or at least 18 or at least 20) carbon atoms. The number of carbon atoms may range from at least 12 to 60, or at least 16 to 30.

In one embodiment the invention provides a lubricating composition comprising an oil of lubricating viscosity and a copolymer comprising units derived from monomers (i) an α-olefin and (ii) an ethylenically unsaturated carboxylic acid or derivatives thereof esterified with a primary alcohol branched at the β- or higher position, wherein the copolymer is an interpolymer, and wherein the interpolymer has a reduced specific viscosity of up to 0.08, or 0.02 to 0.08 (or 0.02 to 0.07, 0.03 to 0.07 or 0.04 to 0.06).

In one embodiment the copolymer described above further comprises at least one of an ester group and a nitrogen containing group (such as amino-, amido- and/or imido- group), typically sufficient to provide 0.01 wt % to 1.5 wt % (or 0.02 wt % to 0.75 wt %, or 0.04 wt % to 0.25 wt %) nitrogen to the copolymer.

In one embodiment the copolymer may be derived from monomers (i) an α-olefin and (ii) an ethylenically unsaturated carboxylic acid or derivatives thereof,
wherein 0.1 to 99.89 (or 1 to 50,or 2.5 to 20, or 5 to 15) percent of the carboxylic acid units esterified are functionalised with a primary alcohol branched at the β- or higher position,
wherein 0.1 to 99.89 (or 1 to 50, or 2.5 to 20, or 5 to 15) percent of the carboxylic acid units esterified are functionalised with a linear alcohol or a alpha-branched alcohol,
wherein 0.01 to 10 % (or 0.1 % to 20 %, or 0.02 % to 7.5 %, or 0.1 to 5 %, or 0.1 to less than 2 %) of the carboxylic acid units has at least one of an amino-, amido- and/or imido- group, and
wherein the copolymer has a reduced specific viscosity of up to 0.08.

In one embodiment the copolymer may be derived from monomers (i) an α-olefin and (ii) an ethylenically unsaturated carboxylic acid or derivatives thereof,
wherein 0.1 to 99.89 percent of the carboxylic acid units are esterified with a primary alcohol branched at the β- or higher position,
wherein 0.1 to 99.89 percent of the carboxylic acid units are esterified with a linear alcohol or an alpha-branched alcohol (e.g, a secondary alcohol),
wherein 0.01 to 10 % of the carboxylic acid units has at least one of an amino-, amido- and/or imido- group, and
wherein the copolymer has a reduced specific viscosity of up to 0.08.

In one embodiment the copolymer may be derived from monomers (i) an α-olefin and (ii) an ethylenically unsaturated carboxylic acid or derivatives thereof,
wherein 0.1 to 99.89 percent of the carboxylic acid units are esterified with a primary alcohol branched at the β- or higher position,
wherein 0.1 to 99.9 percent of the carboxylic acid units are esterified with a linear alcohol or a alpha-branched alcohol,
wherein 0 to 10 % of the carboxylic acid units has at least one of an amino-, amido- and/or imido- group, and
wherein the copolymer has a reduced specific viscosity of up to 0.08.

In one embodiment the copolymer may be derived from monomers (i) an α-olefin and (ii) an ethylenically unsaturated carboxylic acid or derivatives thereof,
wherein 5 to 15 percent of the carboxylic acid units are esterified with a primary alcohol branched at the β- or higher position,
wherein 0.1 to 95 percent of the carboxylic acid units are esterified with a linear alcohol or a alpha-branched alcohol,
wherein 0 to less than 2 % of the carboxylic acid units has at least one of an amino-, amido- and/or imido- group, and
wherein the copolymer has a reduced specific viscosity of up to 0.08.

In different embodiments the α-olefin has 6 or more, 10 to 18, or 12 carbon atoms.

The ethylenically unsaturated carboxylic acid or derivatives thereof may be fumaric acid, maleic anhydride, maleic acid, (meth)acrylic acid, itaconic anhydride or itaconic acid. In one embodiment the ethylenically unsaturated carboxylic acid or derivatives thereof is maleic anhydride.

In one embodiment the copolymer is composed of units derived from monomers of (i) an α-olefin having 6 or more, 10 to 18, or 12 carbon atoms, and (ii) maleic anhydride.

In one embodiment the invention provides a process for preparing a copolymer comprising the steps of:
(1) reacting (i) an α-olefin and (ii) an ethylenically unsaturated carboxylic acid or derivatives thereof (typically fumaric acid, maleic anhydride, maleic acid, (meth)acrylic acid, itaconic anhydride or itaconic acid) or derivatives thereof to form a copolymer;
(2) esterifying the copolymer of step (1) with a primary alcohol branched at the β- or higher position to form an esterified copolymer; and
(3) optionally reacting the esterified copolymer of step (2) with an amine in an amount to provide the esterified copolymer with 0.01 wt % to 1.5 wt % (or 0.05 wt % to 0.75 wt %, or 0.075 wt % to 0.25 wt %) nitrogen,
wherein the copolymer of step (1) has a reduced specific viscosity of up to 0.08, or 0.02 to 0.08 (or 0.02 to 0.07, 0.03 to 0.07 or 0.04 to 0.06).

In one embodiment the process described above further comprises step (3).

In one embodiment the process described above does not include step (3).

In one embodiment the invention provides a process for preparing a copolymer comprising the steps of:
(1) reacting (i) an α-olefin and (ii) an esterified carboxylic acid or derivatives thereof, wherein the esterified carboxylic acid or derivatives thereof has ester groups derived from a primary alcohol branched at the β- or higher position, to form a product;
(2) optionally reacting the product of step (1) with an amine in an amount to provide the esterified copolymer with 0.01 wt% to 1.5 wt % (or 0.05 wt % to 1 wt %, or 0.075 wt % to 0.5 wt %) nitrogen,
   wherein the copolymer has a reduced specific viscosity of up to 0.08, or 0.02 to 0.08 (or 0.02 to 0.07, 0.03 to 0.07 or 0.04 to 0.06).

In one embodiment the process described above further comprises step (2).

In one embodiment the process described above does not include step (2).

In one embodiment the invention provides a copolymer obtained/obtainable by a process described above.

In one embodiment the invention provides a lubricating composition comprising an oil of lubricating viscosity and a copolymer obtained/obtainable by the process described above.

The present invention in one embodiment provides a copolymer of Formula (1), wherein the copolymer (prior to esterification) has a reduced specific viscosity of up to 0.08, or 0.02 to 0.08 (or 0.02 to 0.07, 0.03 to 0.07 or 0.04 to 0.06) and pendant groups as represented within ( )_{w} of the formula: 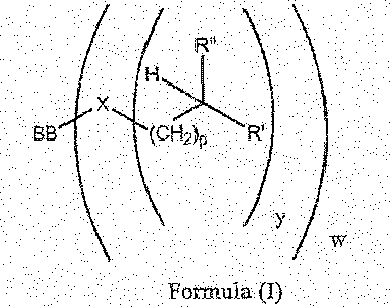 wherein
Formula (I) is a copolymer backbone (BB) with one or more pendant groups, wherein BB is derived from a copolymer of (i) an α-olefin and (ii) an ethylenically unsaturated carboxylic acid or derivatives thereof (typically fumaric acid, maleic anhydride, maleic acid, (meth)acrylic acid, itaconic anhydride or itaconic acid);
X is a functional group which either (i) contains a carbon and at least one oxygen or nitrogen atom or (ii) is an alkylene group with 1 to 5 carbon atoms (typically -CH₂-), connecting the copolymer backbone and a branched hydrocarbyl group contained within ( )_{y};
w is the number of pendant groups attached to the copolymer backbone, which may be in the range of 2 to 2000, or 2 to 500, or 5 to 250;
y is 0, 1, 2 or 3, provided that in at least 1 mol % of the pendant groups, y is not zero; and with the proviso that when y is 0, X is bonded to a terminal group in a manner sufficient to satisfy the valence of X, wherein the terminal group is selected from hydrogen, alkyl, aryl, a metal (typically introduced during neutralisation of ester reactions. Suitable metals include calcium, magnesium, barium, zinc, sodium, potassium or lithium) or ammonium cation, and mixtures thereof;
p is an integer in the range of 1 to 15 (or 1 to 8, or 1 to 4);
R' and R" are independently linear or branched hydrocarbyl groups, and the combined total number of carbon atoms present in R' and R" is at least 12 (or at least 16, or at least 18 or at least 20),

In one embodiment the invention provides a lubricant composition comprising (a) an oil of lubricating viscosity, and (b) a copolymer of formula (1) with pendant groups as defined above.

In one embodiment the invention provides a lubricant or lubricant concentrate obtained (or obtainable) by admixing the copolymer of the invention with at least one of (i) an oil of lubricating viscosity, or (ii) other performance additives (as defined below).

In one embodiment the invention provides for the use of the copolymer described herein above as an oil of lubricating viscosity in the presence of other lubricants. The resultant lubricant may be defined as a multi-grade lubricant.

In one embodiment the primary alcohol branched at the β- or higher position described herein may Guerbet alcohol. Methods to prepare Guerbet alcohols are disclosed in US Patent 4,767,815 (see column 5, line 39 to column 6, line 32).

In one embodiment the invention provides a lubricant or lubricant concentrate obtained (or obtainable) by admixing the copolymer of the invention with (i) an oil of lubricating viscosity, and (ii) one or more other performance additives.

In one embodiment the invention provides a lubricant or lubricant concentrate obtained (or obtainable) by admixing the copolymer of the invention with one or more other performance additives (as defined below).

In one embodiment the invention provides for the use of the copolymer described herein above as an oil of lubricating viscosity in the absence of other base oils.

In one embodiment the invention provides for the use of the copolymer described herein above as an oil of lubricating viscosity in the absence of other lubricant base oil. Typically when used as an oil of lubricating viscosity, the copolymer may be used as a lubricant base oil replacement. Typically the base oil for replacement may include at least one base oil selected from the group consisting of polyalphaolefins (such as PAO-100), brightstock, and polylester refrigeration lubricants.

In one embodiment the invention provides a method of providing a lubricant with at least one (or at least two, or up to all) of acceptable or improved shear stability, acceptable or improved viscosity index control, acceptable or improved oxidation control, and acceptable or improved low temperature viscosity. The copolymer may be employed as an oil of lubricating viscosity in the presence of absence of other base oil.

In one embodiment the invention provides for the use of the copolymer disclosed herein to provide to a lubricant composition at least one (or at least two, or all) of acceptable or improved shear stability, acceptable or improved viscosity index control, acceptable or improved low temperature viscosity and acceptable or improved oxidation control.

In one embodiment the invention provides for the use of the copolymer described herein above in a lubricant for oxidation control.

### DETAILED DESCRIPTION OF THE INVENTION

The present invention provides a copolymer as disclosed herein with pendant groups, lubricants containing said copolymer and a method of controlling the viscosity index of a lubricant. In one embodiment the copolymer of the present invention is useful as a base oil replacement. In one embodiment the copolymer of the present invention is capable of oxidation control in a lubricant.

A measurement correlating with molecular weight of the copolymer (or interpolymer such as an alternating copolymer) may be expressed in terms of the "reduced specific viscosity" of the copolymer which is a recognised means of expressing the molecular size of a polymeric substance. As used herein, the reduced specific viscosity (abbreviated as RSV) is the value typically obtained in accordance with the formula RSV = (Relative Viscosity - 1)/Concentration, wherein the relative viscosity is determined by measuring, by means of a dilution viscometer, the viscosity of a solution of 1.6 g of the polymer in 100 cm³ of acetone and the viscosity of acetone at 30 °C. For purpose of computation by the above formula, the concentration is adjusted to 1.6 g of the copolymer per 100 cm³ of acetone. A more detailed discussion of the reduced specific viscosity, also known as the specific viscosity, as well as its relationship to the average molecular weight of a copolymer, appears in Paul J. Flory, Principles of Polymer Chemistry, (1953 Edition) pages 308 et seq.

In different embodiments the copolymer with pendant groups may contain 0.10 % to 100 %, or 0.5 % to 20 %, or 0.75 % to 10 %, branched hydrocarbyl groups represented by a group within ( )_{y} of the formula above, expressed as a percentage of the total number of pendant groups. (The pendant groups of formula (1) may also be used to define the ester groups as defined above by the phrase "a primary alcohol branched at the β- or higher position").

In different embodiments the functional groups defined by X on the formula above, may comprise at least one of -CO₂-, -C(O)N= or -(CH₂)ᵥ-, wherein v is an integer in the range of 1 to 20, or 1 to 10, or 1 to 2.

In one embodiment X is derived from an ethylenically unsaturated carboxylic acid or derivatives thereof. Examples of a suitable carboxylic acid or derivatives thereof typically include maleic anhydride, maleic acid, (meth)acrylic acid, itaconic anhydride or itaconic acid. In one embodiment the ethylenically unsaturated carboxylic acid or derivatives thereof may be at least one of maleic anhydride or maleic acid.

In one embodiment X is other than an alkylene group, connecting the copolymer backbone and the branched hydrocarbyl groups.

In different embodiments the pendant groups may be esterified, amidated or imidated functional groups.

In one embodiment the pendant groups may be derived from esterified and/or amidated functional groups.

In one embodiment the copolymer includes esterified pendant groups. The pendant groups may be derived from Guerbet alcohols. The Guerbet alcohols may contain 10 to 60, or 12 to 60, or 16 to 40 carbon atoms.

Examples of suitable groups for R' and R" on the formula defined above include the following:
1) alkyl groups containing C₁₅₋₁₆ polymethylene groups, such as 2-C₁₋₁₅ akyl-hexadecyl groups (e.g. 2-octylhexadecyl) and 2-alkyl-octadecyl groups (e.g. 2-ethyloctadecyl, 2-tetradecyl-octadecyl and 2-hexadecyloctadecyl);
2) alkyl groups containing C₁₃₋₁₄ polymethylene groups, such as 1-C₁₋₁₅ alkyl-tetradecyl groups (e.g. 2-hexyltetradecyl, 2-decyltetradecyl and 2-undecyltridecyl) and 2-C₁₋₁₅ alkyl-hexadecyl groups (e.g. 2-ethyl-hexadecyl and 2-dodecylhexadecyl);
3) alkyl groups containing C₁₀₋₁₂polymethylene groups, such as 2-C₁₋₁₅ alkyl-dodecyl groups (e.g. 2-octyldodecyl) and 2-C₁₋₁₅ akyl-dodecyl groups (2-hexyldodecyl and 2-octyldodecyl), 2-C₁₋₁₅ alkyl-tetradecyl groups (e.g. 2-hexyltetradecyl and 2-decyltetradecyl);
4) alkyl groups containing C₆₋₉polymethylene groups, such as 2-C₁₋₁₅ alkyl-decyl groups (e.g. 2-octyldecyl) and 2,4-di-C₁₋₁₅ alkyl-decyl groups (e.g. 2-ethyl-4-butyl-decyl group);
5) alkyl groups containing C₁₋₅ polymethylene groups, such as 2-(3-methylhexyl)-7-methyl-decyl and 2-(1,4,4-trimethylbutyl)-5,7,7-trimethyl-octyl groups; and
6) and mixtures of two or more branched alkyl groups, such as alkyl residues of oxoalcohols corresponding to propylene oligomers (from hexamer to undecamer), ethylene/propylene (molar ratio 16:1-1:11) oligomers, isobutene oligomers (from pentamer to octamer), C₅₋₁₇ α-olefin oligomers (from dimer to hexamer).

The pendant groups may contain a total combined number of carbon atoms on R' and R" in the range of 12 to 60, or 14 to 50, or 16 to 40, or 18 to 40, or 20 to 36.

Each of R' and R" may individually contain 5 to 25, or 8 to 32, or 10 to 18 methylene carbon atoms. In one embodiment the number of carbon atoms on each R' and R" group may be 10 to 24.

Examples of suitable primary alcohol branched at the β- or higher position include 2-ethylhexanol, 2-butyloctanol, 2-hexyldecanol, 2-octyldodecanol, 2-decyltetradecanol, or mixtures thereof.

The ethylenically unsaturated carboxylic acid or derivatives thereof may be an acid or anhydride or derivatives thereof that may be wholly esterified, partially esterified or mixtures thereof. When partially esterified, other functional groups include acids, salts or mixtures thereof. Suitable salts include alkali metals, alkaline earth metals or mixtures thereof. The salts include lithium, sodium, potassium, magnesium, calcium or mixtures thereof. The unsaturated carboxylic acid or derivatives thereof includes acrylic acid, methyl acrylate, methacrylic acid, maleic acid or anhydride, fumaric acid, itaconic acid or anhydride or mixtures thereof, or substituted equivalents thereof.

Suitable examples of the ethylenically unsaturated carboxylic acid or derivatives thereof include itaconic anhydride, maleic anhydride, methyl maleic anhydride, ethyl maleic anhydride, dimethyl maleic anhydride or mixtures thereof.

In one embodiment the ethylenically unsaturated carboxylic acid or derivatives thereof includes maleic anhydride or derivatives thereof.

Examples of an alpha-olefin include 1-decene, 1-undecene, 1-dodecene, 1-tridecene, 1-tetradecene, 1-pentadecene, 1-hexadecene, 1-heptadecene 1-octadecene, or mixtures thereof. An example of a useful alpha-olefin is 1-dodecene.

In one embodiment the copolymer of the invention further includes a nitrogen containing group. The nitrogen containing group may be derived from a nitrogen containing compound capable of being incorporated during copolymerization.

Examples of suitable nitrogen-containing compounds capable of being incorporated into the copolymer include N,N-dimethylacrylamide, N-vinyl carbonamides (such as, N-vinyl-formamide, N-vinylacetoamide, N-vinyl propionamides, N-vinyl hydroxyacetoamide, vinyl pyridine, N-vinyl imidazole, N-vinyl pyrrolidinone, N-vinyl caprolactam, dimethylaminoethyl acrylate, dimethylaminoethyl methacrylate, dimethylaminobutylacrylamide, dimethylamine propyl methacrylate, dimethylaminopropylacrylamide, dimethylamino-propylmethacrylamide, dimethylaminoethylacrylamide or mixtures thereof.

The copolymer may optionally be prepared in the presence of a free radical initiator, solvent, chain transfer agent, or mixtures thereof. A person skilled in the art will appreciate that altering the amount of initiator and/or chain transfer agent will alter the number average molecular weight and RSV of the copolymer of the invention.

The solvent is known and is normally a liquid organic diluent Generally, the solvent has as a boiling point thereof high enough to provide the required reaction temperature. Illustrative diluents include toluene, t-butyl benzene, benzene, xylene, chlorobenzene and various petroleum fractions boiling above 125 °C.

The free radical initiator is known and includes peroxy compounds, peroxides, hydroperoxides, and azo compounds which decompose thermally to provide free radicals. Other suitable examples are described in J. Brandrup and E. H. Immergut, Editor, "Polymer Handbook", 2nd edition, John Wiley and Sons, New York (1975), pages II-1 to II-40. Examples of a free radical initiator include those derived from a free radical-generating reagent, and examples include benzoyl peroxide, t-butyl perbenzoate, t-butyl metachloroperbenzoate, t-butyl peroxide, sec-butylperoxydicarbonate, azobisisobutyronitrile, t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. In one embodiment the free radical generating reagent is t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. Commercially available free radical initiators include classes of compound sold under the trademark Trigonox®-21 from Akzo Nobel.

The chain transfer agent is known to a person skilled in the art. The chain transfer agent may be added to a polymerisation as a means of controlling the molecular weight of the polymer. The chain transfer agent may include a sulphur-containing chain transfer agent such as n- and t-dodecyl mercaptan, 2-mercapto ethanol, methyl-3-mercaptopropionate. Terpenes can also be used. Typically the chain transfer agent may be n- and t-dodecyl mercaptan.

In one embodiment the copolymer of the invention further includes a nitrogen containing group that may be capable of reacting with the functionalised copolymer backbone, typically for capping the copolymer backbone. The capping may result in the copolymer having ester, amide, imide or amine groups.

In one embodiment the nitrogen containing group may be derived from an amine which is aromatic. Aromatic amines include those which can be represented by the general structure NH₂-Ar or T-NH-Ar, where T may be alkyl or aromatic, Ar is an aromatic group, including nitrogen-containing or amino-substituted aromatic groups and Ar groups including any of the following structures: 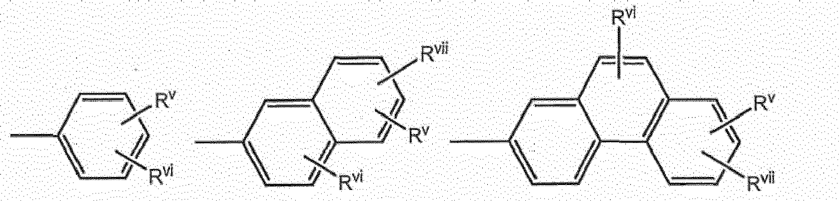 as well as multiple non-condensed or linked aromatic rings. In these and related structures, R^{v}, R^{vi}, and R^{vii} can be independently, among other groups disclosed herein, -H, -C₁₋₁₈ alkyl groups, nitro groups, -NH-Ar, -N=N-Ar, -NH-CO-Ar, -OOC-Ar, -OOC-C₁₋₁₈ alkyl, -COO-C₁₋₁₈ alkyl, -OH, -0-(CH₂CH₂-O)ₙC₁₋₁₈ alkyl groups, and -O-(CH₂CH₂O)ₙAr (where n is 0 to 10).

Aromatic amines include those amines wherein a carbon atom of the aromatic ring structure is attached directly to the amino nitrogen. The amines may be monoamines or polyamines. The aromatic ring will typically be a mononuclear aromatic ring (i.e., one derived from benzene) but can include fused aromatic rings, especially those derived from naphthalene. Examples of aromatic amines include aniline, N-alkylanilines such as N-methylaniline and N-butylaniline, di-(para-methylphenyl)amine, 4-aminodiphenylamine, N,N-dimethylphenylenediamine, naphthylamine, 4-(4-nitrophenylazo)aniline (disperse orange 3), sulphamethazine, 4-phenoxyaniline, 3-nitroaniline, 4-aminoacetanilide (N-(4-aminophenyl)acetamide)), 4-amino-2-hydroxy-benzoic acid phenyl ester (phenyl amino salicylate), N-(4-amino-phenyl)-benzamide, various benzylamines such as 2,5-dimethoxybenzylamine, 4-phenylazoaniline, and substituted versions of these. Other examples include para-ethoxyaniline, para-dodecylaniline, cyclohexyl-substituted naphthylamine, and thienyl-substituted aniline. Examples of other suitable aromatic amines include amino-substituted aromatic compounds and amines in which the amine nitrogen is a part of an aromatic ring, such as 3-aminoquinoline, 5-aminoquinoline, and 8-aminoquinoline. Also included are aromatic amines such as 2-aminobenzimidazole, which contains one secondary amino group attached directly to the aromatic ring and a primary amino group attached to the imidazole ring. Other amines include N-(4-anilinophenyl)-3-aminobutanamide or 3-amino propyl imidazole. Yet other amines include 2,5-dimethoxybenzylamine

Additional aromatic amines and related compounds are disclosed in U.S. Patent 6,107,257 and 6,107,258; some of these include aminocarbazoles, benzoimidazoles, aminoindoles, aminopyrroles, amino-indazolinones, amino-perimidines, mercaptotriazoles, aminophenothiazines, aminopyridines, aminopyrazines, aminopyrimidines, pyridines, pyrazines, pyrimidines; amino-thiadiazoles, aminothiothiadiazoles, and aminobenzotriaozles. Other suitable amines include 3-amino-N-(4-anilinophenyl)-N-isopropyl butanamide, and N-(4-anilinophenyl)-3-{(3-aminopropyl)-(cocoalkyl)amino} butanamide. Other aromatic amines which can be used include various aromatic amine dye intermediates containing multiple aromatic rings linked by, for example, amide structures. Examples include materials of the general structure 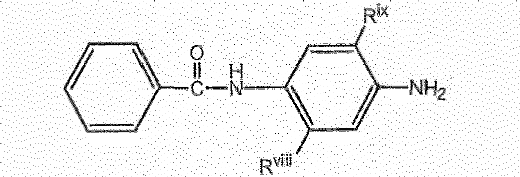 and isomeric variations thereof, where R^{viii} and R^{ix} are independently alkyl or alkoxy groups such as methyl, methoxy, or ethoxy. In one instance, R^{viii} and R^{ix} are both-OCH₃ and the material is known as Fast Blue RR [CAS# 6268-05-9].

In another instance, R^{ix} is -OCH₃ and R^{viii} is -CH₃, and the material is known as Fast Violet B [99-21-8]. When both R^{viii} and R^{ix} are ethoxy, the material is Fast Blue BB [120-00-3]. U.S. Patent 5,744,429 discloses other aromatic amine compounds, particularly aminoalkylphenothiazines. N-aromatic substituted acid amide compounds, such as those disclosed in U.S. Patent Application 2003/0030033 A1, may also be used for the purposes of this invention. Suitable aromatic amines include those in which the amine nitrogen is a substituent on an aromatic carboxyclic compound, that is, the nitrogen is not sp² hybridized within an aromatic ring.

The aromatic amine will typically have an N-H group capable of condensing with the pendant carbonyl containing group. Certain aromatic amines are commonly used as antioxidants. Of particular importance in that regard are alkylated diphenylamines such as nonyldiphenylamine and dinonyldiphenylamine. To the extent that these materials will condense with the carboxylic functionality of the polymer chain, they are also suitable for use within the present invention. However, it is believed that the two aromatic groups attached to the amine nitrogen reduce its reactivity. Thus, suitable amines include those having a primary nitrogen atom (-NH₂) or a secondary nitrogen atom in which one of the hydrocarbyl substituents is a relatively short chain alkyl group, e.g., methyl. Among such aromatic amines are 4-phenylazoaniline, 4-aminodiphenylamine, 2-aminobenzimidazole, and N,N-dimethylphenylenediamine. Some of these and other aromatic amines may also impart antioxidant performance to the copolymers, in addition to dispersancy and other properties.

In one embodiment of the invention, the amine component of the reaction product further includes an amine having at least two N-H groups capable of condensing with the carboxylic functionality of the copolymer. This material is referred to hereinafter as a "linking amine" as it can be employed to link together two of the copolymers containing the carboxylic acid functionality. It has been observed that higher molecular weight materials may provide improved performance, and this is one method to increase the material's molecular weight. The linking amine can be either an aliphatic amine or an aromatic amine; if it is an aromatic amine, it is considered to be in addition to and a distinct element from the aromatic amine described above, which typically will have only one condensable or reactive NH group, in order to avoid excessive crosslinking of the copolymer chains. Examples of such linking amines include ethylenediamine, phenylenediamine, and 2,4-diaminotoluene; others include propylenediamine, hexamethylenediamine, and other, ω-polymethylenediamines. The amount of reactive functionality on such a linking amine can be reduced, if desired, by reaction with less than a stoichiometric amount of a blocking material such as a hydrocarbyl-substituted succinic anhydride.

In one embodiment the amine includes nitrogen-containing compounds capable of reacting directly with a copolymer backbone. Examples of suitable amines include N-p-diphenylamine 1,2,3,6-tetrahydrophthalimide, 4-anilinophenyl methacrylamide, 4-anilinophenyl maleimide, 4-anilinophenyl itaconamide, acrylate and methacrylate esters of 4-hydroxydiphenylamine, and the reaction product of p-aminodiphenylamine or p-alkylaminodiphenylamine with glycidyl methacrylate.

In one embodiment the copolymer of the invention provides for oxidation control. Typically, the copolymer with oxidation control contains an incorporated residue of an amine-containing compound such as morpholines, pyrrolidinones, imidazolidinones, acetamides, β-alanine alkyl esters, or mixtures thereof. Examples of suitable nitrogen-containing compounds include 3-morpholin-4-yl-propylamine, 3-morpholin-4-yl-ethylamine, β-alanine alkyl esters (typically alkyl esters have 1 to 30, or 6 to 20 carbon atoms), or mixtures thereof.

In one embodiment the compounds based on imidazolidinones, cyclic carbamates or pyrrolidinones may be derived from a compound of general structure: 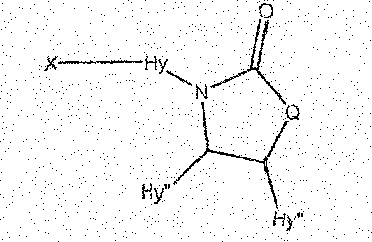 wherein
X = -OH or -NH₂;
Hy" is hydrogen, or a hydrocarbyl group (typically alkyl, or C₁₋₄-, or C₂- alkyl);
Hy is a hydrocarbylene group (typically alkylene, or C₁₋₄-, or C₂- alkylene);
Q = >NH, >NR, >CH₂, >CHR, >CR₂, or -O- (typically >NH, or >NR) and
R is C₁₋₄ alkyl.

In one embodiment the imidazolidinone includes 1-(2-amino-ethyl)-imidazolidin-2-one (may also be called aminoethylethyleneurea), 1-(3-amino-propyl)-imidazolidin-2-one, 1-(2-hydroxy-ethyl)-imidazolidin-2-one, 1-(3-amino-propyl)-pyrrolidin-2-one, 1-(3-amino-ethyl)-pyrrolidin-2-one, or mixtures thereof.

In one embodiment the acetamide may be represented by the general structure: 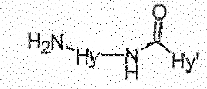 wherein
Hy is a hydrocarbylene group (typically alkylene, or C₁₋₄-, or C₂- alkylene); and Hy' is a hydrocarbyl group (typically alkyl, or C₁₋₄-, or methyl).

Examples of a suitable acetamide include N-(2-amino-ethyl)-acetamide, or N-(2-amino-propyl)-acetamide.

In one embodiment the β-alanine alkyl esters may be represented by the general structure: 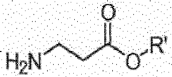 wherein
R' is a an alkyl group having 1 to 30, or 6 to 20 carbon atoms.

Examples of suitable β-alanine alkyl esters include β-alanine octyl ester, β-alanine decyl ester, β-alanine 2-ethylhexyl ester, β-alanine dodecyl ester, β-alanine tetradecyl ester, or β-alanine hexadecyl ester.

In one embodiment the copolymer may be reacted with an amine selected from the group consisting of 1-(2-amino-ethyl)-imidazolidin-2-one, 4-(3-aminopropyl)morpholine, 3-(dimethylamino)-1-propylamine, N-phenyl-p-phenylenediamine, N-(3-aminopropyl)-2-pyrrolidinone, aminoethyl acetamide, β-alanine methyl ester, 1-(3-aminopropyl) imidazole, and mixtures thereof.

In one embodiment the copolymer may be reacted with an amine-containing compound selected from morpholines, imidazolidinones, and mixtures thereof.

The nitrogen-containing compound may be directly reacted onto the copolymer backbone by grafting of the amine onto the copolymer backbone either (i) in a solution using a solvent, or (ii) under reactive extrusion conditions in the presence or absence of solvent. The amine-functional monomer may be grafted onto the copolymer backbone in multiple ways. In one embodiment, the grafting takes place by a thermal process via an "ene" reaction. In one embodiment the grafting takes place by a Friedel Crafts acylating reaction. In another embodiment the grafting is carried out in solution or solid form through a free radical initiator. Solution grafting is a well-known method for producing grafted copolymers. In such a process, reagents are introduced either neat or as solutions in appropriate solvents. The desired copolymer product may then be separated from the reaction solvents and/or impurities by appropriate purification steps.

In one embodiment the nitrogen-containing compound may be directly reacted onto the copolymer backbone by free radical catalysed grafting of the copolymer in solvents like benzene, t-butyl benzene, toluene, xylene, or hexane. The reaction may be carried out at an elevated temperature in the range of 100 °C to 250 °C or 120 °C to 230 °C, or 160 °C to 200 °C, e.g., above 160 °C, in a solvent, such as a mineral lubricating oil solution containing, e.g., 1 to 50, or 5 to 40 wt %, based on the initial total oil solution of said copolymer and preferably under an inert environment.

### Oils of Lubricating Viscosity

The lubricating composition includes an oil of lubricating viscosity. Such oils include natural and synthetic oils, oil derived from hydrocracking, hydrogenation, and hydrofinishing, unrefined, refined and re-refined oils and mixtures thereof.

Unrefined oils are those obtained directly from a natural or synthetic source generally without (or with little) further purification treatment.

Refined oils are similar to the unrefined oils except they have been further treated in one or more purification steps to improve one or more properties. Purification techniques are known in the art and include solvent extraction, secondary distillation, acid or base extraction, filtration, percolation and the like.

Re-refined oils are also known as reclaimed or reprocessed oils, and are obtained by processes similar to those used to obtain refined oils and often are additionally processed by techniques directed to removal of spent additives and oil breakdown products.

Natural oils useful in making the inventive lubricants include animal oils or vegetable oils (e.g., castor oil or lard oil), mineral lubricating oils such as liquid petroleum oils and solvent-treated or acid-treated mineral lubricating oils of the paraffinic, naphthenic or mixed paraffinic-naphthenic types and oils derived from coal or shale or mixtures thereof.

Synthetic lubricating oils are useful and include hydrocarbon oils such as polymerised and copolymerised olefins (e.g., polybutylenes, polypropylenes, propyleneisobutylene copolymers); poly(1-hexenes), poly(1-octenes), poly(1-decenes), and mixtures thereof; alkyl-benzenes (e.g. dodecylbenzenes, tetradecylbenzenes, dinonylbenzenes, di-(2-ethylhexyl)-benzenes); polyphenyls (e.g., biphenyls, terphenyls, alkylated polyphenyls); alkylated diphenyl ethers and alkylated diphenyl sulphides and the derivatives, analogs and homologs thereof or mixtures thereof.

Other synthetic lubricating oils include polyol esters (such as Priolube®3970), diesters, liquid esters of phosphorus-containing acids (e.g., tricresyl phosphate, trioctyl phosphate, and the diethyl ester of decane phosphonic acid), or polymeric tetrahydrofurans. Synthetic oils may be produced by Fischer-Tropsch reactions and typically may be hydroisomerised Fischer-Tropsch hydrocarbons or waxes. In one embodiment oils may be prepared by a Fischer-Tropsch gas-to-liquid synthetic procedure as well as other gas-to-liquid (GTL) oils.

Oils of lubricating viscosity may also be defined as specified in the American Petroleum Institute (API) Base Oil Interchangeability Guidelines. The five base oil groups are as follows: Group I (sulphur content >0.03 wt %, and/or <90 wt % saturates, viscosity index 80-120); Group II (sulphur content ≤0.03 wt %, and ≥90 wt % saturates, viscosity index 80-120); Group III (sulphur content ≤0.03 wt %, and ≥90 wt % saturates, viscosity index ≥120); Group IV (all polyalphaolefins (PAOs)); and Group V (all others not included in Groups I, II, III, or IV). The oil of lubricating viscosity includes an API Group I, Group II, Group III, Group IV, Group V oil or mixtures thereof. Often the oil of lubricating viscosity is an API Group I, Group II, Group III, Group IV oil or mixtures thereof. Alternatively the oil of lubricating viscosity is often an API Group I, Group II, Group III oil or mixtures thereof.

The lubricating composition may be in the form of a concentrate and/or a fully formulated lubricant. If the polymer with pendant groups of the present invention is in the form of a concentrate (which may be combined with additional oil to form, in whole or in part, a finishes lubricant), the ratio of the polymer with pendant groups to the oil of lubricating viscosity and/or to diluent oil include the ranges of 1:99 to 99:1 by weight, or from 80:20 to 10:90 by weight.

### Other Performance Additives

Compositions derived from the copolymer and/or lubricating compositions described herein optionally further includes other performance additives. The other performance additives comprise at least one of metal deactivators, conventional detergents (detergents prepared by conventional processes known in the art), dispersants, viscosity modifiers, friction modifiers, corrosion inhibitors, dispersant viscosity modifiers, antiwear agents, extreme pressure agents, antiscuffing agents, antioxidants, foam inhibitors, demulsifiers, pour point depressants, seal swelling agents and mixtures thereof. Typically, fully-formulated lubricating oil will contain one or more of these performance additives.

### Dispersants

Dispersants are often known as ashless-type dispersants because, prior to mixing in a lubricating oil composition, they do not contain ash-forming metals and they do not normally contribute any ash forming metals when added to a lubricant and polymeric dispersants. Ashless type dispersants are characterised by a polar group attached to a relatively high molecular weight hydrocarbon chain. Typical ashless dispersants include N-substituted long chain alkenyl succinimides. Examples of N-substituted long chain alkenyl succinimides include polyisobutylene succinimide with number average molecular weight of the polyisobutylene from which it is derived in the range 350 to 5000, or 500 to 3000.

In one embodiment the invention further includes at least one dispersant derived from polyisobutylene, an amine and zinc oxide to form a polyisobutylene succinimide complex with zinc. The polyisobutylene succinimide complex with zinc may be used alone or in combination.

Another class of ashless dispersant is Mannich bases. Mannich dispersants are the reaction products of alkyl phenols with aldehydes (especially formaldehyde) and amines (especially polyalkylene polyamines). The alkyl group typically contains at least 30 carbon atoms.

The dispersants may also be post-treated by conventional methods by a reaction with any of a variety of agents. Among these are boron compounds (such as boric acid), urea, thiourea, dimercaptothiadiazoles, carbon disulphide, aldehydes, ketones, carboxylic acids such as terephthalic acid, hydrocarbon-substituted succinic anhydrides, maleic anhydride, nitriles, epoxides, and phosphorus compounds. In one embodiment the post-treated dispersant is borated.

### Detergents

The lubricant composition optionally further includes known neutral or overbased detergents, i.e., ones prepared by conventional processes known in the art. Suitable detergent substrates include, phenates, sulphur containing phenates, sulphonates, salixarates, salicylates, carboxylic acid, phosphorus acid, alkyl phenol, sulphur coupled alkyl phenol compounds, or saligenins.

### Antioxidant

Antioxidant compounds are known and include sulphurised olefins, diphenylamines, hindered phenols, molybdenum dithiocarbamates, and mixtures thereof. Antioxidant compounds may be used alone or in combination.

The hindered phenol antioxidant often contains a secondary butyl and/or a tertiary butyl group as a sterically hindering group. The phenol group is often further substituted with a hydrocarbyl group and/or a bridging group linking to a second aromatic group. Examples of suitable hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant is an ester and may include, e.g., Irganox™ L-135 from Ciba. Suitable examples of molybdenum dithiocarbamates which may be used as an antioxidant include commercial materials sold under the trade names such as Vanlube 822™ and Molyvan™ A from R. T. Vanderbilt Co., Ltd., and Adeka Salkura-Lube™ S-100, S-165 and S-600 from Asahi Denka Kogyo K. K and mixtures thereof.

### Viscosity Modifiers

Viscosity modifiers, other than the polymer with pendant groups of the present invention, include hydrogenated styrene-butadiene rubbers, ethylenepropylene copolymers, hydrogenated styrene-isoprene polymers, hydrogenated diene polymers, polyalkyl styrenes, polyolefins, polyalkyl (meth)acrylates and esters of maleic anhydride-styrene copolymers, or mixtures thereof. In one embodiment the polymeric viscosity modifier is a poly(meth)acrylate.

### Antiwear Agent

The lubricating composition optionally further includes at least one antiwear agent. Examples of suitable antiwear agents include oil soluble amine salts of phosphorus compounds, sulphurised olefins, metal dihydrocarbyldithio-phosphates (such as zinc dialkyldithiophosphates), thiocarbamate-containing compounds, such as thiocarbamate esters, thiocarbamate amides, thiocarbamic ethers, alkylene-coupled thiocarbamates, and bis(S-alkyldithiocarbamyl) disulphides.

In one embodiment the oil soluble phosphorus amine salt antiwear agent includes an amine salt of a phosphorus acid ester or mixtures thereof. The amine salt of a phosphorus acid ester includes phosphoric acid esters and amine salts thereof; dialkyldithiophosphoric acid esters and amine salts thereof; amine salts of phosphites; and amine salts of phosphorus-containing carboxylic esters, ethers, and amides; and mixtures thereof. The amine salt of a phosphorus acid ester may be used alone or in combination.

In one embodiment the oil soluble phosphorus amine salt includes partial amine salt-partial metal salt compounds or mixtures thereof. In one embodiment the phosphorus compound further includes a sulphur atom in the molecule. In one embodiment the amine salt of the phosphorus compound is ashless, i.e., metal-free (prior to being mixed with other components).

The amines which may be suitable for use as the amine salt include primary amines, secondary amines, tertiary amines, and mixtures thereof. The amines include those with at least one hydrocarbyl group, or, in certain embodiments, two or three hydrocarbyl groups. The hydrocarbyl groups may contain 2 to 30 carbon atoms, or in other embodiments 8 to 26, or 10 to 20, or 13 to 19 carbon atoms.

Primary amines include ethylamine, propylamine, butylamine, 2-ethylhexylamine, octylamine, and dodecylamine, as well as such fatty amines as n-octylamine, n-decylamine, n-dodecylamine, n-tetradecylamine, n-hexadecyl-amine, n-octadecylamine and oleyamine. Other useful fatty amines include commercially available fatty amines such as "Armeen®" amines (products available from Akzo Chemicals, Chicago, Illinois), such as Armeen C, Armeen O, Armeen OL, Armeen T, Armeen HT, Armeen S and Armeen SD, wherein the letter designation relates to the fatty group, such as coco, oleyl, tallow, or stearyl groups.

Examples of suitable secondary amines include dimethylamine, diethylamine, dipropylamine, dibutylamine, diamylamine, dihexylamine, diheptylamine, methylethylamine, ethylbutylamine and ethylamylamine. The secondary amines may be cyclic amines such as piperidine, piperazine and morpholine.

The amine may also be a tertiary-aliphatic primary amine. The aliphatic group in this case may be an alkyl group containing 2 to 30, or 6 to 26, or 8 to 24 carbon atoms. Tertiary alkyl amines include monoamines such as tert-butylamine, tert-hexylamine, 1-methyl-1-amino-cyclohexane, tert-octylamine, tert-decylamine, tertdodecylamine, tert-tetradecylamine, tert-hexadecylamine, tert-octadecylamine, tert-tetracosanylamine, and tert-octacosanylamine.

In one embodiment the phosphorus acid amine salt includes an amine with C11 to C14 tertiary alkyl primary groups or mixtures thereof. In one embodiment the phosphorus acid amine salt includes an amine with C14 to C18 tertiary alkyl primary amines or mixtures thereof. In one embodiment the phosphorus acid amine salt includes an amine with C18 to C22 tertiary alkyl primary amines or mixtures thereof.

Mixtures of amines may also be used in the invention. In one embodiment a useful mixture of amines is "Primene® 81R" and "Primene® JMT." Primene® 81R and Primene® JMT (both produced and sold by Rohm & Haas) are mixtures of C11 to C14 tertiary alkyl primary amines and C18 to C22 tertiary alkyl primary amines respectively.

In one embodiment oil soluble amine salts of phosphorus compounds include a sulphur-free amine salt of a phosphorus-containing compound is obtained/obtainable by a process comprising: reacting an amine with either (i) a hydroxy-substituted di-ester of phosphoric acid, or (ii) a phosphorylated hydroxy-substituted di- or tri- ester of phosphoric acid. A more detailed description of compounds of this type is disclosed in International Application PCT/US08/051126 (or equivalent to US Application 11/627405).

In one embodiment the hydrocarbyl amine salt of an alkylphosphoric acid ester is the reaction product of a C14 to C18 alkylated phosphoric acid with Primene 81R™ (produced and sold by Rohm & Haas) which is a mixture of C11 to C14 tertiary alkyl primary amines.

Examples of hydrocarbyl amine salts of dialkyldithiophosphoric acid esters include the reaction product(s) of isopropyl, methyl-amyl (4-methyl-2-pentyl or mixtures thereof), 2-ethylhexyl, heptyl, octyl or nonyl dithiophosphoric acids with ethylene diamine, morpholine, or Primene 81R™, and mixtures thereof.

In one embodiment the dithiophosphoric acid may be reacted with an epoxide or a glycol. This reaction product is further reacted with a phosphorus acid, anhydride, or lower ester. The epoxide includes an aliphatic epoxide or a styrene oxide. Examples of useful epoxides include ethylene oxide, propylene oxide, butene oxide, octene oxide, dodecene oxide, and styrene oxide. In one embodiment the epoxide is propylene oxide. The glycols may be aliphatic glycols having from 1 to 12, or from 2 to 6, or 2 to 3 carbon atoms. The dithiophosphoric acids, glycols, epoxides, inorganic phosphorus reagents and methods of reacting the same are described in U.S. Patent numbers 3,197,405 and 3,544,465. The resulting acids may then be salted with amines. An example of suitable dithiophosphoric acid is prepared by adding phosphorus pentoxide (about 64 grams) at 58°C over a period of 45 minutes to 514 grams of hydroxypropyl O,O-di(4-methyl-2-pentyl)phosphorodithioate (prepared by reacting di(4-methyl-2-pentyl)-phosphorodithioic acid with 1.3 motes of propylene oxide at 25 °C). The mixture is heated at 75°C for 2.5 hours, mixed with a diatomaceous earth and filtered at 70 °C. The filtrate contains 11.8% by weight phosphorus, 15.2% by weight sulphur, and an acid number of 87 (bromophenol blue).

The dithiocarbamate-containing compounds may be prepared by reacting a dithiocarbamate acid or salt with an unsaturated compound. The dithiocarbamate containing compounds may also be prepared by simultaneously reacting an amine, carbon disulphide and an unsaturated compound. Generally, the reaction occurs at a temperature from 25°C to 125°C.

Examples of suitable olefins that may be sulphurised to form an the sulphurised olefin include propylene, butylene, isobutylene, pentene, hexane, heptene, octane, nonene, decene, undecene, dodecene, undecyl, tridecene, tetradecene, pentadecene, hexadecene, heptadecene, octadecene, octadecenene, nonodecene, eicosene or mixtures thereof. In one embodiment, hexadecene, heptadecene, octadecene, octadecenene, nonodecene, eicosene or mixtures thereof and their dimers, trimers and tetramers are especially useful olefins. Alternatively, the olefin may be a Diels-Alder adduct of a diene such as 1,3-butadiene and an unsaturated ester, such as, butylacrylate.

Another class of sulphurised olefin includes fatty acids and their esters. The fatty acids are often obtained from vegetable oil or animal oil; and typically contain 4 to 22 carbon atoms. Examples of suitable fatty acids and their esters include triglycerides, oleic acid, linoleic acid, palmitoleic acid or mixtures thereof. Often, the fatty acids are obtained from lard oil, tall oil, peanut oil, soybean oil, cottonseed oil sunflower seed oil or mixtures thereof. In one embodiment fatty acids and/or ester are mixed with olefins.

In an alternative embodiment, the ashless antiwear agent may be a monoester of a polyol and an aliphatic carboxylic acid, often an acid containing 12 to 24 carbon atoms. Often the monoester of a polyol and an aliphatic carboxylic acid is in the form of a mixture with a sunflower oil or the like, which may be present in the friction modifier mixture from 5 to 95, in several embodiments from 10 to 90, or from 20 to 85, or 20 to 80 weight percent of said mixture. The aliphatic carboxylic acids (especially a monocarboxylic acid) which form the esters are those acids typically containing 12 to 24, or from 14 to 20 carbon atoms. Examples of carboxylic acids include dodecanoic acid, stearic acid, lauric acid, behenic acid, and oleic acid.

Polyols include diols, triols, and alcohols with higher numbers of alcoholic OH groups. Polyhydric alcohols include ethylene glycols, including di-, tri- and tetraethylene glycols; propylene glycols, including di-, tri- and tetrapropylene glycols; glycerol; butane diol; hexane diol; sorbitol; arabitol; mannitol; sucrose; fructose; glucose; cyclohexane diol; erythritol; and pentaerythritols, including di- and tripentaerythritol. Often the polyol is diethylene glycol, triethylene glycol, glycerol, sorbitol, pentaerythritol or dipentaerythritol.

The commercially available monoester known as "glycerol monooleate" is believed to include 60 ± 5 percent by weight of the chemical species glycerol monooleate, along with 35 ± 5 percent glycerol dioleate, and less than 5 percent trioleate and oleic acid. The amounts of the monoesters, described above, are calculated based on the actual, corrected, amount of polyol monoester present in any such mixture.

### Antiscuffing Agent

The lubricant composition may also contain an antiscuffing agent. Antiscuffing agent compounds are believed to decrease adhesive wear and are often sulphur containing compounds. Typically the sulphur containing compounds include sulphurised olefins, organic sulphides and polysulphides, such as dibenzyldisulphide, bis-(chlorobenzyl) disulphide, dibutyl tetrasulphide, di-tertiary butyl polysulphide, sulphurised methyl ester of oleic acid, sulphurised alkylphenol, sulphurised dipentene, sulphurised terpene, sulphurised Diels-Alder adducts, alkyl sulphenyl N'N-dialkyl dithiocarbamates, the reaction product of polyamines with polybasic acid esters, chlorobutyl esters of 2,3-dibromopropoxyisobutyric acid, acetoxymethyl esters of dialkyl dithiocarbamic acid and acyloxyalkyl ethers of xanthogenic acids and mixtures thereof.

### Extreme Pressure Agents

Extreme Pressure (EP) agents that are soluble in the oil include sulphur- and chlorosulphur-containing EP agents, chlorinated hydrocarbon EP agents and phosphorus EP agents. Examples of such EP agents include chlorinated wax; sulphurised olefins (such as sulphurised isobutylene), organic sulphides and polysulphides such as dibenzyldisulphide, bis-(chlorobenzyl) disulphide, dibutyl tetrasulphide, sulphurised methyl ester of oleic acid, sulphurised alkylphenol, sulphurised dipentene, sulphurised terpene, and sulphurised Diels-Alder adducts; phosphosulphurised hydrocarbons such as the reaction product of phosphorus sulphide with turpentine or methyl oleate; phosphorus esters such as the dihydrocarbon and trihydrocarbon phosphites, e.g., dibutyl phosphite, diheptyl phosphite, dicyclohexyl phosphite, pentylphenyl phosphite; dipentylphenyl phosphite, tridecyl phosphite, distearyl phosphite and polypropylene substituted phenol phosphite; metal thiocarbamates such as zinc dioctyldithiocarbamate and barium heptylphenol diacid; amine salts of alkyl and dialkylphosphoric acids or derivatives including, for example, the amine salt of a reaction product of a dialkyldithiophosphoric acid with propylene oxide and subsequently followed by a further reaction with P₂O₅; and mixtures thereof (as described in US 3,197,405).

Corrosion inhibitors that may be useful in the compositions of the invention include fatty amines, octylamine octanoate, condensation products of dodecenyl succinic acid or anhydride and a fatty acid such as oleic acid with a polyamine.

Foam inhibitors that may be useful in the compositions of the invention include copolymers of ethyl acrylate and 2-ethylhexylacrylate and optionally vinyl acetate; demulsifiers including trialkyl phosphates, polyethylene glycols, polyethylene oxides, polypropylene oxides and (ethylene oxide-propylene oxide) polymers.

Pour point depressants that may be useful in the compositions of the invention include polyalphaolefins, esters of maleic anhydride-styrene copolymers, poly(meth)acrylates, polyacrylates or polyacrylamides.

Friction modifiers that may be useful in the compositions of the invention include fatty acid derivatives such as amines, esters, epoxides, fatty imidazolines, condensation products of carboxylic acids and polyalkylenepolyamines and amine salts of alkylphosphoric acids.

### Industrial Application

The method and lubricating composition of the invention may be suitable for refrigeration lubricants, greases, gear oils, axle oils, drive shaft oils, traction oils, manual transmission oils, automatic transmission oils, metal working fluids, hydraulic oils, or internal combustion engine oils.

In one embodiment the method and lubricating composition of the invention may be suitable for at least one of gear oils, axle oils, drive shaft oils, traction oils, manual transmission oils or automatic transmission oils.

An automatic transmission includes continuously variable transmissions (CVT), infinitely variable transmissions (IVT), toroidal transmissions, continuously slipping torque converter clutches (CSTCC), stepped automatic transmissions or dual clutch transmissions (DCT).

The use (may also be referred to as a method) and copolymer described herein is capable of providing a lubricant with at least one (or at least two, or all) of acceptable or improved shear stability, acceptable or improved viscosity index control, acceptable or improved oxidation control, and acceptable or improved low temperature viscosity. The copolymer may be employed as an oil of lubricating viscosity in the presence or absence of other base oil.

When the copolymer with pendant groups further includes a nitrogen containing compound, the copolymer may further have acceptable/improved dispersancy properties (cleanliness) and oxidation control.

The internal combustion engine may be a 2-stroke or 4-stroke engine. Suitable internal combustion engines include marine diesel engines, aviation piston engines, low-load diesel engines, and automobile and truck engines.

In several embodiments a suitable lubricating composition includes the copolymer present (on an actives basis) in ranges as shown in the following table.

**Table**

| Embodiments | wt % of Copolymer of the Invention | wt % of Other Performance Additives | wt % of Oil of Lubricating Viscosity |
|---|---|---|---|
| A | 0.01-79.9 | 0-20 | 0.01-99.99 |
| B | 0.1-75 | 0.01-15 | 10-99.89 |
| C | 1-70 | 0.5-20 | 10-98.5 |
| D | 1.5-65 | 0.5-15 | 20-98 |
| E | 10-60 | 0.5-15 | 25-89.5 |
| F | 20-60 | 0.5-15 | 25-79.5 |
| G | 27-58 | 0.5-15 | 58-72.5 |

In different embodiments the copolymer of the invention may be present at 0.1 wt % to 99.9 wt %, or 1 wt % to 90 wt %, or 1.5 wt % to 65 wt %, or 10 wt % to 60 wt %, or 20 wt % to 60 wt %, or 27 wt % to 58 wt %.

The following examples provide an illustration of the invention. These examples are non exhaustive and are not intended to limit the scope of the invention.

### EXAMPLES

### Preparation of the Copolymer

### Preparative Example 1: 1-Dodecene and Maleic Anhydride Copolymer

Copolymer Backbone Preparation (Cpp): a copolymer is prepared by reacting in a 3 litre flask 1 mole of maleic anhydride, and Y moles (defined below) of 1-dodecene in the presence of 60 wt% of toluene solvent. The flask is fitted with a flange lid and clip, PTFE stirrer gland, rod and overhead stirrer, thermocouple, nitrogen inlet port and water-cooled condenser. Nitrogen is blown through the flask at 0.028 m³/hr (or 1 SCFH). A separate 500 ml flask with a side arm is charged with 0.05 moles of tert-butyl peroxy-2-ethylhexanoate initiator (a commercially available initiator from Akzo Nobel, known as Trigonox®21S), optionally n-dodecyl mercaptan (chain transfer agent, CTA) and additional toluene. A nitrogen line is fitted to the arm and nitrogen is applied at 0.085 m³/hr (or 0.3 SCFH) for 30 minutes. The 3 litre flask is heated to 105°C. The Trigonox 21S initiator/toluene mixture is pumped from the 500 ml flask into the 3 litre flask via a Masterflex™ pump (flow rate set at 0.8 ml/min) over a period of 5 hours. The contents of the 3 litre flask are stirred for 1 hour before cooling to 95°C. The contents of the 3 litre flask are stirred overnight. Typically a clear colourless gel is obtained. The amount of each reagent is shown in the table below.

The copolymers prepared are characterised by RSV method described in the description above. The RSV data is presented in the table.

| Copolymer Prep Example | Y moles of 1-Dodecene | Mole Ratio of CTA to Initiator | RSV |
|---|---|---|---|
| Cpp1 | 1 | 0:1 | 0.058 |
| Cpp2 | 0.95 | 0:1 | 0.071 |
| Cpp3 | 0.93 | 0:1 | 0.077 |
| Cpp4 | 0.91 | 0:1 | 0.065 |
| Cpp5 | 0.90 | 0:1 | 0.060 |
| Cpp6 | 0.85 | 0:1 | 0.071 |
| Cpp7 | 0.80 | 0:1 | 0.067 |
| Cpp8* | 1 | 0.6:1 | N/M |

| | | | |
|---|---|---|---|
| Footnote: N/M is not measured. | | | |

For Cpp8 the amount of toluene solvent added is 55 wt % and not 60 wt % quoted for other syntheses.

Preparative Example of an esterified copolymer of dodecene-maleic anhydride polymer (Esc): the copolymer from above is esterified in the presence of a linear alcohol and a primary alcohol branched at the β- or higher position. The esterified copolymer is prepared in a flask fitted with a Dean-Stark trap capped with a condenser. An amount of copolymer containing 1 mole of carboxy groups is heated in the flask to 110 °C and stirred for 30 minutes. One mole of alcohol is added. If the amount of the primary alcohol branched at the β- or higher position is greater than one mole, only one mole is added at this point. Conversely if less than one mole of the primary alcohol branched at the β- or higher position is present, sufficient linear alcohol is used to provide a total of one mole equivalent of alcohol. The alcohol is pumped into the flask via peristaltic pump over a period of 35 minutes. Catalytic amounts of methane sulphonic acid along with the remaining moles of alcohol are then pumped into the flask over a period of 5 hours whilst heating to and holding at 145°C and removing water in the Dean-Stark trap.

The reaction temperature is reduced to 135 °C, and sufficient butanol is added sequentially to the flask until the total acid number (TAN) is not higher than 4 mg KOH/g. The flask is heated to 150 °C and sufficient sodium hydroxide is added to quench the methanesulphonic acid. The flask is cooled to ambient temperature resulting in an esterified copolymer. The procedure employs the materials listed in the table below.

| Ester Copolymer | Copolymer Prep | Moles of Linear Alcohol | Moles of Branched Alcohol | | |
|---|---|---|---|---|---|
| | | | B1 | B2 | B3 |
| Esc1 | Cpp1 | 1.8 | 0.2 | | |
| Esc2 | Cpp2 | 1.8 | 0.2 | | |
| Esc3 | Cpp3 | 1.8 | 0.2 | | |
| Esc4 | Cpp4 | 1.8 | 0.2 | | |
| Esc5 | Cpp5 | 1.8 | 0.2 | | |
| Esc6 | Cpp6 | 1.8 | 0.2 | | |
| Esc7 | Cpp7 | 1.8 | 0.2 | | |
| Esc8 | Cpp8 | 1.8 | 0.2 | | |
| Esc9 | Cpp8 | 1.6 | | 0.4 | |
| Esc10 | Cpp8 | 1.4 | | | 0.6 |
| Esc11 | Cpp8 | 1.6 | 0.4 | | |
| Esc12 | Cpp8 | 1.4 | | 0.6 | |
| Esc13 | Cpp8 | 1 | | 1 | |
| Esc14 | Cpp1 | 1 | | | 1 |
| Esc15 | cpp1 | | 1 | | |
| Esc16 | Cpp2 | 0.5 | | | 1.5 |
| Esc17 | Cpp5 | 0 | 2 | | |
| Esc18 | Cpp5 | 0 | | 2 | |
| Esc19 | Cpp5 | 0 | | | 2 |
| Esc20 | Cpp3 | 0 | 2 | | |
| Esc21* | Cpp8 | 2 | 0 | | |
| Esc22 | Cpp1 | 0 | 2 | | |
| Esc23 | Cpp8 | 1.4 | 0.6 | | |

| | | | | | |
|---|---|---|---|---|---|
| Footnote: The linear alcohol is a C₈₋₁₀ mixture commercially available as Alfol®810 B1 is 2-hexyldecanol B2 is 2-ethylhexanol B3 is a 2-octyldodecanol Esc21* is a comparative esterified copolymer having the same polymer backbone as the invention, but only having linear ester groups | | | | | |

Preparative Example of an esterified copolymer capped with an amine (Ecca): each esterified copolymer from above is reacted with an amine in a flask fitted with a Dean-Stark trap capped with a condenser. Sufficient amine is added to provide the esterified copolymer with a weight percent nitrogen content as is shown in the table below. The amine is charged into the flask over a period of 30 minutes and stirred for 16 hours at 150°C. The flask is cooled to 11.5 °C and drained. The resultant product is vacuum stripped at 150°C and held for 2.5 hours. The procedure employs the materials listed in the table below. The table below presents the information for a representative number of esterified copolymers capped with an amine.

| Ecca | Esterified Copolymer | Amine | Nitrogen Content (wt %) |
|---|---|---|---|
| Ecca1 | Esc1 | 1 | 0.1 |
| Ecca2 | Esc1 | 2 | 0.1 |
| Ecca3 | Esc1 | 3 | 0.1 |
| Ecca4 | Esc1 | 4 | 0.1 |
| Ecca5 | Esc2 | 5 | 0.1 |
| Ecca6 | Esc3 | 6 | 0.1 |
| Ecca7 | Esc4 | 7 | 0.1 |
| Ecca8 | Esc5 | 8 | 0.1 |
| Ecca9 | Esc8 | 1 | 0.4 |
| Ecca10 | Esc9 | 2 | 0.4 |
| Ecca11 | Esc10 | 3 | 0.4 |
| Ecca12 | Esc11 | 1 | 0.4 |
| Ecca13 | Esc12 | 5 | 0.4 |
| Ecca14 | Esc13 | 5 | 0.4 |
| Ecca15 | Esc14 | 2 | 0.1 |
| Ecca16 | Esc15 | 1 | 0.1 |
| Ecca17 | Esc1 | 1 | 0.2 |
| Ecca18 | Esc7 | 2 | 0.1 |
| Ecca19 | Esc10 | 3 | 0.1 |
| Ecca20 | Esc11 | 4 | 0.1 |
| Ecca21 | Esc13 | 5 | 0.1 |
| Ecca22 | Esc14 | 6 | 0.1 |
| Ecca23 | Esc15 | 7 | 0.1 |
| Ecca24 | Esc16 | 8 | 0.1 |
| Ecca25 | Esc19 | 1 | 0.1 |
| Ecca26 | Esc20 | 3 | 0.1 |
| Ecca27 | Esc21 | 2 | 0.1 |
| Ecca28 | Esc14 | 1 | 0.1 |
| Ecca29 | Esc22 | 1 | 0.1 |
| Ecca30 | Esc23 | 2 | 0.1 |
| Ecca31 | Esc8 | 2 | 0.1 |

| | | | |
|---|---|---|---|
| Footnote: Amine 1 is 1-(2-amino-ethyl)-imidazolidin-2-one Amine 2 is 4-(3-aminopropyl)morpholine Amine 3 is 3-(dimethylamino)-1-propylamine Amine 4 is N-phenyl-p-phenylenediamine Amine 5 is N-(3-Aminopropyl)-2-pyrrolidinone Amine 6 is Aminoethyl acetamide Amine 7 is β-alanine methyl ester Amine 8 is 1-(3-aminopropyl) imidazole | | | |

Preparative Example 2: 1-octene-maleic anhydride copolymers are prepared in the same way as Preparative Example 1, except the 1-dodecene is replaced with 1-octene. All other reagents (initiators, alcohols, and amines), concentrations and reaction conditions are the same.

Preparative Example 3: 1-decene-maleic anhydride copolymers are prepared in the same way as Preparative Example 1, except the 1-dodecene is replaced with 1-decene. All other reagents (initiators, alcohols, and amines), concentrations and reaction conditions are the same.

Preparative Example 4: 1-tetradecene-maleic anhydride copolymers are prepared in the same way as Preparative Example 1, except the 1-dodecene is replaced with 1-tetraadecene. All other reagents (initiators, alcohols, and amines), concentrations and reaction conditions are the same.

Preparative Example 5: 1-hexadecene-maleic anhydride copolymers are prepared in the same way as Preparative Example 1, except the 1-dodecene is replaced with 1-hexadecene. All other reagents (initiators, alcohols, and amines), concentrations and reaction conditions are the same.

Test 1 Characterisation: The esterified copolymers are characterised. The kinematic viscosity is determined employing ASTM method D445 at 100°C on 200 ml of the esterified copolymer capped with an amine. GPC analysis (using a polystyrene standard in tetrahydrofuran) is used to determine weight average molecular weight and number average molecular weight. Representative results obtained are shown in the following table.

| Polymer Example | Mw (1000s) | Mn (1000s) | KV100 (mm²/s) |
|---|---|---|---|
| Ecca1 | 19.9 | 8.5 | 570 |
| Ecca2 | 18.9 | 9.1 | 240 |
| Ecca3 | 13.0 | 6.1 | 420 |
| Ecca4 | 16.3 | 7.8 | 430 |
| Ecca5 | 18.9 | 8.4 | 240 |
| Ecca6 | 19.5 | 8.7 | 390 |
| Ecca7 | 19.0 | 8.7 | 410 |
| Ecca8 | 15.0 | 7.1 | 385 |
| Ecca9 | 18.0 | 7.5 | 280 |
| Ecca11 | 16.2 | 7.5 | 300 |
| Ecca12 | 16.6 | 7.2 | 260 |
| Ecca13 | 17.0 | 7.0 | 325 |
| Ecca14 | 16.2 | 6.9 | 590 |

| | | | |
|---|---|---|---|
| Footnote: Mw is weight average molecular weight Mn is number average molecular weight KV100 is kinematic viscosity at 100 °C | | | |

Test 2 DKA Oxidation: oxidation tests are performed on axle fluids containing 34.3 wt % of the following polymers: Ecca1, Ecca2, a commercially available synthetic ester copolymer sold under the tradename Ketjenlube® K3700 and a commercially available PAO-100 (polyalphaolefin with a viscosity of 100 mm²/s at 100°C). The DKA oxidation test is carried out according to the CEC procedure L-48-A-00(B) with operating conditions of 160°C for 192 hours. The results obtained for percentage increase in kinematic viscosity at 100°C and a cleanliness blotter rating test are shown below. Typically higher values recorded for the blotter test indicate improved performance. Typically lower values recorded for the KV100 percentage increase indicate improved performance.

| Example | KV100, % Increase | Blotter Test |
|---|---|---|
| Ecca1 | 27 | 100 |
| Ecca2 | 247 | 90 |
| PAO-100 | 102 | 30 |
| K3700 | 79 | 22 |

The data presented indicates that Ecca1 and Ecca2 have improved cleanliness (which can be used as a measure of oxidative stability) compared with commercially available PAO-100.

In general terms the copolymers of the invention are capable of providing at least one (or at least two, or all) of acceptable or improved shear stability, acceptable or improved viscosity index control and acceptable or improved oxidation control.

### Test 3:Viscometrics on Axle Fluids

A series of SAE 75W-110 axle fluids (AF1 to AF8) are treated with the copolymer of the invention to provide approximately equal kinematic viscosity at 100 °C. The axle fluid further contains 0.2 wt % of a polymethacrylate pour point depressant. The axle fluids are evaluated for kinematic viscosity (KV100, by ASTM method D445 at 100°C) brookfield viscosity (BV, by ASTM D2983 at -40°C), and viscosity index (VI, by ASTM D2270). The results obtained are:

| Lubricating Composition Example | Polymer Example | Treat Rate (wt%) | BV -40 (1000's) | KV100 | Viscosity Index |
|---|---|---|---|---|---|
| AF1 | Esc21 | 41 | 178 | 18.4 | 178 |
| AF2 | Esc14 | 46.9 | 61 | 19.3 | 193 |
| AF3 | Esc22 | 57.8 | 47 | 19.6 | 191 |
| AF4 | Esc23 | 43 | 97.6 | 19.5 | 189 |
| AF5 | Esc8 | 42.5 | 118 | 19.4 | 190 |
| AF6 | Esc1 | 36 | 96.6 | 18.4 | 192 |
| AF7 | Esc1 | 38.9 | 106 | 18.9 | 190 |
| AF8 | Esc12 | 40 | 125 | 18.6 | 187 |

| | | | | | |
|---|---|---|---|---|---|
| Footnote: AF1 is comparative Example. | | | | | |

### Test 4: Manual Transmission Fluids

A series of SAE 75W-85 manual transmission fluids (MF1 to MF3) are treated with the copolymer of the invention to provide approximately equal kinematic viscosity at 100 °C. The manual transmission fluid further contains 0.2 wt % of a polymethacrylate pour point depressant. The manual transmission fluids are evaluated in a similar way to axle fluids of test 3. The results obtained are:

| Lubricating Composition Example | Polymer Example | Treat Rate (wt %) | BV -40 (1000's) | KV100 | Viscosity Index |
|---|---|---|---|---|---|
| MF1 | Esc21 | 27 | 61.9 | 11.2 | 176 |
| MF2 | Esc23 | 28.5 | 42.8 | 11.5 | 183 |
| MF3 | Esc8 | 28.5 | 47.2 | 11.6 | 185 |

| | | | | | |
|---|---|---|---|---|---|
| Footnote: MF1 is a comparative example. | | | | | |

In general terms the axle fluid and manual transmission fluid having the copolymer of the invention (i.e., not copolymer of Esc21) have at least one of being able to provide acceptable/improved shear stability, viscosity index control and low temperature viscosity. The copolymer may also be useful for acting as a base oil.

Each of the documents referred to above is incorporated herein by reference. Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements. As used herein, the expression "consisting essentially of" permits the inclusion of substances that do not materially affect the basic and novel characteristics of the composition under consideration. As used herein any member of a genus (or list) may be excluded from the claims.

As used herein, the term "(meth) acrylic" and related terms includes both acrylic and methacrylic groups.

As used herein, the term "a primary alcohol branched at the β- or higher position" relates to an alcohol with branching at the 2- position or a higher position (e.g., 3-, or 4-, or 5-, or 6-, or 7- position etc.)

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:
a. hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
b. substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulphoxy);
c. hetero substituents, that is, substituents which, while having a predominantly hydrocarbon character, in the context of this invention, contain other than carbon in a ring or chain otherwise composed of carbon atoms; and
d. heteroatoms include sulphur, oxygen, nitrogen, and encompass substituents as pyridyl, furyl, thienyl and imidazolyl. In general, no more than two, in one aspect no more than one, non-hydrocarbon substituent will be present for every ten carbon atoms in the hydrocarbyl group; typically, there will be no non-hydrocarbon substituents in the hydrocarbyl group.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.
Various preferred features and embodiments of the present invention will now be described with reference to the following numbered paragraphs (paras).
1. A copolymer comprising units derived from monomers (i) an α-olefin and (ii) an ethylenically unsaturated carboxylic acid or derivatives thereof esterified with a primary alcohol branched at the β-or higher position, wherein the copolymer prior to esterification has a reduced specific viscosity of up to 0.08.
2. The copolymer of para 1, wherein the ethylenically unsaturated carboxylic acid or derivatives thereof is maleic anhydride.
3. The copolymer of any preceding paras 1 to 2, wherein the copolymer has a reduced specific viscosity of 0.02 to 0.07, 0.03 to 0.07 or 0.04 to 0.06.
4. The copolymer of any preceding paras 1 to 3, wherein the α-olefin has 6 or more, 10 to 18, or 12 carbon atoms.
5. The copolymer of any preceding paras 1 to 4, wherein the copolymer is composed of units derived from monomers of (i) an α-olefin having 6 or more, 10 to 18, or 12 carbon atoms, and (ii) maleic anhydride.
6. The copolymer of any preceding paras 1 to 5, wherein the copolymer is composed of units derived from monomers of (i) an α-olefin having 12 carbon atoms, and (ii) maleic anhydride.
7. The copolymer of any preceding paras 1 to 6, further amidated or imidated with a nitrogen-containing compound.
8. The copolymer of any preceding paras 1 to 7, wherein the copolymer comprises units derived from monomers (i) an α-olefin and (ii) an ethylenically unsaturated carboxylic acid or derivatives thereof, wherein 75 % to 99.9 percent of the carboxylic acid units are esterified with a primary alcohol branched at the β- or higher position, and wherein 0.1 to 25 % of the carboxylic acid units are amidated or imidated with a nitrogen-containing compound.
9. The copolymer of any preceding paras 7 to 8, wherein the nitrogen- containing compound is an amine -containing compound selected from the group consisting of morpholines, imidazolidinones, acetamides, β-alanine alkyl esters, and mixtures thereof.
10. The copolymer of any preceding paras 1 to 9, wherein the copolymer is an alternating copolymer.
11. The copolymer of any preceding paras 1 to 10, wherein the primary alcohol branched at the β-or higher position may have at least 12 to 60 carbon atoms.
12. The copolymer of any preceding paras 1 to 10, wherein the primary alcohol branched at the β-or higher position is a Guerbet alcohol.
13. A process for preparing a copolymer comprising the steps of:
   (1) reacting (i) an α-olefin and (ii) an ethylenically unsaturated carboxylic acid or derivatives thereof or derivatives thereof to form a copolymer;
   (2) esterifying the copolymer of step (1) with a primary alcohol branched at the β- or higher position to form an esterified copolymer; and
   (3) optionally reacting the esterified copolymer of step (2) with an amine in an amount to provide the esterified copolymer with 0.01 wt % to 1.5 wt % nitrogen, wherein the copolymer of step (1) has a reduced specific viscosity of up to 0.08.
14. The process of para 13 further comprising step (3).
15. A process for preparing a copolymer comprising the steps of:
   (1) reacting (i) an α-olefin and (ii) an esterified carboxylic acid or derivatives thereof, wherein the esterified carboxylic acid or derivatives thereof has ester groups derived from a primary alcohol branched at the β- or higher position, to form a product;
   (2) optionally reacting the product of step (1) with an amine in an amount to provide the esterified copolymer with 0.01 wt % to 1.5 wt % nitrogen, wherein the copolymer has a reduced specific viscosity of up to 0.08.
16. The process of para 15 further comprising step (2).
17. A copolymer obtained/obtainable by the processes of any preceding paras 13 to 16.
18. A lubricating composition comprising an oil of lubricating viscosity and a copolymer obtained/obtainable by the process of any preceding paras 13 to 17.
19. A lubricating composition comprising an oil of lubricating viscosity and a copolymer of any preceding paras 1 to 18.
20. The use of the copolymer of any preceding paras 1 to 19 as a lubricant base oil.
21. The use of para 20, wherein the lubricant base oil is the copolymer of any preceding paras 1 to 19 and in the absence of other base oils.
22. The use of para 20, wherein the copolymer of any preceding paras 1 to 19 replaces at least one base oil selected from the group consisting of polyalphaolefins, brightstock, and polyester refrigeration lubricants.
23. The use of the copolymer of any preceding paras 7 to 9 in a lubricant for oxidation control.

## Claims

1. A copolymer comprising units derived from monomers (i) an α-olefin and (ii) an ethylenically unsaturated carboxylic acid or derivatives thereof esterified with a primary alcohol branched at the β- or higher position,
wherein the primary alcohol branched at the β- or higher position may have at least 12 to 60 carbon atoms; and
wherein the copolymer prior to esterification has a reduced specific viscosity of up to 0.08.

2. The copolymer of claim 1, wherein the ethylenically unsaturated carboxylic acid or derivatives thereof is maleic anhydride.

3. The copolymer of any preceding claim 1 to 2, wherein the copolymer has a reduced specific viscosity of 0.02 to 0.07, 0.03 to 0.07 or 0.04 to 0.06.

4. The copolymer of any preceding claim 1 to 3, wherein the α-olefin has 6 or more, 10 to 18, or 12 carbon atoms.

5. The copolymer of any preceding claim 1 to 4, wherein the copolymer is composed of units derived from monomers of (i) an α-olefin having 6 or more, 10 to 18, or 12 carbon atoms, and (ii) maleic anhydride.

6. The copolymer of any preceding claim 1 to 5, wherein the copolymer is composed of units derived from monomers of (i) an α-olefin having 12 carbon atoms, and (ii) maleic anhydride.

7. The copolymer of any preceding claim 1 to 6, further amidated or imidated with a nitrogen-containing compound.

8. The copolymer of any preceding claim 1 to 7, wherein the copolymer comprises units derived from monomers (i) an α-olefin and (ii) an ethylenically unsaturated carboxylic acid or derivatives thereof,
wherein 75 % to 99.9 percent of the carboxylic acid units are esterified with a primary alcohol branched at the β- or higher position, and
wherein 0.1 to 25 % of the carboxylic acid units are amidated or imidated with a nitrogen-containing compound.

9. The copolymer of any preceding claim 7 to 8, wherein the nitrogen-containing compound is an amine-containing compound selected from the group consisting of morpholines, imidazolidinones, acetamides, β-alanine alkyl esters, and mixtures thereof.

10. The copolymer of any preceding claim 1 to 9, wherein the copolymer is an alternating copolymer.

11. The copolymer of any preceding claim 1 to 10, wherein the primary alcohol branched at the β- or higher position is a Guerbet alcohol.

12. A process for preparing a copolymer comprising the steps of:
(1) reacting (i) an α-olefin and (ii) an ethylenically unsaturated carboxylic acid or derivatives thereof or derivatives thereof to form a copolymer;
(2) esterifying the copolymer of step (1) with a primary alcohol branched at the β-or higher position to form an esterified copolymer; and
(3) optionally reacting the esterified copolymer of step (2) with an amine in an amount to provide the esterified copolymer with 0.01 wt % to 1.5 wt % nitrogen,
wherein the primary alcohol branched at the β- or higher position may have at least 12 to 60 carbon atoms; and
wherein the copolymer of step (1) has a reduced specific viscosity of up to 0.08.

13. The process of claim 12 further comprising step (3).

14. A process for preparing a copolymer comprising the steps of:
(1) reacting (i) an α-olefin and (ii) an esterified carboxylic acid or derivatives thereof, wherein the esterified carboxylic acid or derivatives thereof has ester groups derived from a primary alcohol branched at the β- or higher position, to form a product;
(2) optionally reacting the product of step (1) with an amine in an amount to provide the esterified copolymer with 0.01 wt % to 1.5 wt % nitrogen,
wherein the primary alcohol branched at the β- or higher position may have at least 12 to 60 carbon atoms; and
wherein the copolymer has a reduced specific viscosity of up to 0.08.

15. The process of claim 14 further comprising step (2).

16. A copolymer obtained/obtainable by the processes of any preceding claim 12 to 15.

17. A lubricating composition comprising an oil of lubricating viscosity and a copolymer obtained/obtainable by the process of any preceding claim 12 to 16.

18. The use of the copolymer of any preceding claim 1 to 17 as a lubricant base oil.

19. The use of the copolymer of any preceding claim 7 to 9 in a lubricant for oxidation control.
